# DEMANDE DE BREVET EUROPEEN

(11) **EP 4 421 336 A1**
(43) Date de publication de la demande: **28.08.2024**
(21) Numéro de dépôt: 24157551.3
(22) Date de dépôt: 14.02.2024
(51) Int. Cl.: F16C 11/04, F16C 27/02, F16C 33/22, F16C 43/02, F16F 1/38, B60G 7/02, F16C 27/06

(54) **ARTICULATION ÉLASTIQUE POUR RELIER UN ÉLÉMENT DE LIAISON AU SOL À UN CHÂSSIS DE VÉHICULE AUTOMOBILE**

(30) Priorité: 23.02.2023 FR 2301643
(71) Demandeur: Renault s.a.s, 92100 Boulogne Billancourt (FR)
(72) Inventeur: BERSON, Julien, 72000 Le MANS (FR)

(57) **Abrégé**

L'invention concerne une articulation (14) élastique de véhicule automobile comportant:
- une bague (16) extérieure présentant un axe (A) principal;
- une bague (20) intérieure montée concentriquement dans la bague extérieure;
- un manchon (22) élastique intercalé radialement entre la bague intérieure et la bague extérieure, le manchon élastique comportant au moins un tampon (28) déformable qui s'étend axialement en saillie par rapport à la bague extérieure;
- une face (24) de butée orthogonale fixe par rapport à la bague intérieure et contre une zone (30) annulaire d'appui de laquelle les tampons sont montés serrés axialement,
caractérisé en ce que la face de butée comporte un rebord (32) périphérique qui s'étend axialement en saillie et qui entoure la face d'appui afin d'empêcher le fluage des tampons radialement vers l'extérieur.

## Description

### DOMAINE TECHNIQUE DE L'INVENTION

L'invention concerne une articulation élastique pour relier un élément de liaison au sol à un châssis de véhicule automobile.

### ARRIERE PLAN TECHNIQUE DE L'INVENTION

Il est connu d'équiper les véhicules automobiles d'éléments de liaison au sol qui permettent d'effectuer la liaison entre un châssis du véhicule et le terrain sur lequel il évolue.

Les éléments de liaison au sol comportent notamment des éléments assurant la suspension du véhicule. Ces éléments permettent de relier des masses non suspendues, notamment les roues, aux masses suspendues, notamment le châssis du véhicule. De tels éléments de liaison au sol comportent par exemple des bras de suspension, des amortisseurs, etc.

Les éléments de liaison au sol sont généralement montés sur le châssis du véhicule par des articulations élastiques qui permettent un débattement déterminé entre les éléments de liaison au sol et le châssis. Ceci permet d'apporter une souplesse dans la liaison au sol du châssis afin d'améliorer le confort de suspension du véhicule.

Cette articulation élastique comporte une bague intérieure qui est ainsi destinée à être fixée au châssis, par exemple par serrage entre les deux flasques d'une chape. Elle comporte aussi une bague extérieure qui est fixée à l'élément de liaison au sol associé, et elle comporte enfin un manchon élastique qui est intercalé radialement entre les deux bagues pour permettre un déplacement élastique axial relatif entre les deux bagues.

En outre, pour limiter l'amplitude du débattement axial du châssis par rapport à l'essieu, il est connu d'équiper l'articulation d'une face de butée. Cette face de butée est fixée à la bague intérieure de l'articulation. Elle est agencée axialement en vis-à-vis d'un bord du manchon élastique avec un jeu de saturation déterminé lorsqu'aucune contrainte axiale n'est appliquée à l'organe élastique. Le manchon élastique est équipé de tampons qui sont en saillie axialement par rapport aux bagues et qui assurent le contact permanent entre le manchon élastique et la face de butée.

Les tampons permettent d'amortir les chocs, d'absorber les vibrations de participer au rappel élastique de l'articulation élastique dans son état de repos.

Lorsqu'un effort axial est appliqué à l'articulation élastique, les tampons sont écrasés contre la face de butée.

On a observé que la répétition des phases d'écrasement et de relâchement des tampons provoquait un fluage du matériau élastomère radialement vers l'extérieur. Avec le temps et l'usure, le matériau élastomère devient en effet moins élastique et les tampons ont tendances à se déformer de manière permanente en s'écartant vers l'extérieur. Il en résulte que l'extrémité libre des tampons n'est plus agencée en vis-à-vis de la face de butée. Les tampons ne sont de ce fait plus en contact permanent avec la face de butée et/ou ils ne peuvent plus assurer efficacement leur fonction de filtration des vibrations et d'amortissement des chocs.

### BREF RESUME DE L'INVENTION

La présente invention propose une articulation élastique pour relier un élément de liaison au sol à un châssis de véhicule automobile comportant :
- une bague extérieure présentant un axe principal et reliée à l'élément de liaison au sol ;
- une bague intérieure reliée au châssis du véhicule et montée concentriquement dans la bague extérieure ;
- un manchon élastique intercalé radialement entre la bague intérieure et la bague extérieure, le manchon élastique comportant au moins un tampon déformable qui s'étend axialement en saillie par rapport à la bague extérieure ;
- une face de butée orthogonale à l'axe principal qui est fixe par rapport à la bague intérieure et contre une zone annulaire d'appui de laquelle les tampons sont montés serrés axialement,
caractérisé en ce que la face de butée comporte un rebord périphérique qui s'étend axialement en saillie et qui entoure la face d'appui afin d'empêcher le fluage des tampons radialement vers l'extérieur.

Selon une autre caractéristique de l'invention, la zone d'appui de la face de butée s'étend radialement vers l'intérieur jusqu'à la bague intérieure.

Selon une autre caractéristique de l'invention, le rebord périphérique forme un anneau continu qui entoure complètement la zone d'appui.

Selon une autre caractéristique de l'invention, le rebord périphérique forme un anneau discontinu présentant des créneaux libres.

Selon une autre caractéristique de l'invention, le rebord périphérique est ajouré.

Selon une autre caractéristique de l'invention, la face de butée est portée par une coupelle radiale.

Selon une autre caractéristique de l'invention, la coupelle est traversée d'orifices d'évacuation d'eau qui débouchent dans la zone d'appui de la face de butée.

Selon une autre caractéristique de l'invention, la face de butée comporte un rebord interne qui est agencé concentriquement à l'intérieur du rebord périphérique et qui délimite radialement vers l'intérieur la zone d'appui.

Selon une autre caractéristique de l'invention, le rebord interne relie la face d'appui et une face radiale de serrage de la coupelle contre la bague intérieure.

Selon une autre caractéristique de l'invention, la bague extérieure présente une collerette radiale à l'extrémité axiale agencée à proximité de la face de butée, le tampon étant intercalé axialement entre la collerette et la face de butée.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés brièvement décrits ci-après.
La figure 1 est une vue en coupe axiale qui représente une articulation élastique qui est réalisée selon les enseignements de l'invention et qui relie un élément de liaison au sol à un châssis de véhicule automobile.
La figure 2 est une vue en perspective qui représente l'articulation élastique de la figure 1.
La figure 3 est une vue en perspective qui représente une coupelle de l'articulation élastique de la figure 1 selon un premier mode de réalisation de l'invention.
La figure 4 est une vue en perspective qui représente une coupelle de l'articulation élastique de la figure 1 selon un deuxième mode de réalisation de l'invention.
La figure 5 est une vue en perspective qui représente une coupelle de l'articulation élastique de la figure 1 selon un troisième mode de réalisation de l'invention.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations suivantes :
- axiale qui est parallèle à l'axe « A » de l'articulation élastique ;
- radiales qui sont orthogonalement par rapport à l'axe « A » de l'articulation élastique et qui rayonnent depuis ledit axe « A » de l'intérieur, à proximité de l'axe « A », vers l'extérieur.

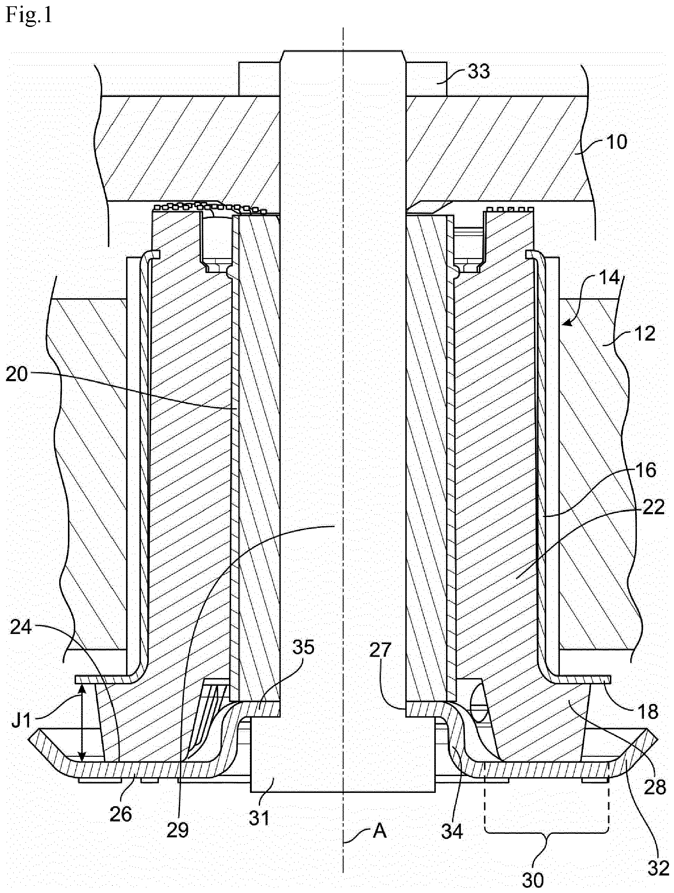

On a représenté très schématiquement à la figure 1 un châssis 10 de véhicule automobile. Un élément 12 de liaison au sol du véhicule automobile est destiné à être relié au châssis 10 représenté à la figure 1 est destiné à recevoir.

L'élément 12 de liaison au sol est par exemple un berceau est destiné à porter un moteur du véhicule et qui est destiné à être relié aux roues avant du véhicule. En variante, l'élément 12 de liaison au sol est une traverse d'essieu ou un bras de suspension.

De manière connue, l'élément 12 de liaison au sol est relié au châssis 10 par l'intermédiaire d'une articulation 14 élastique présentant un axe « A » principal.

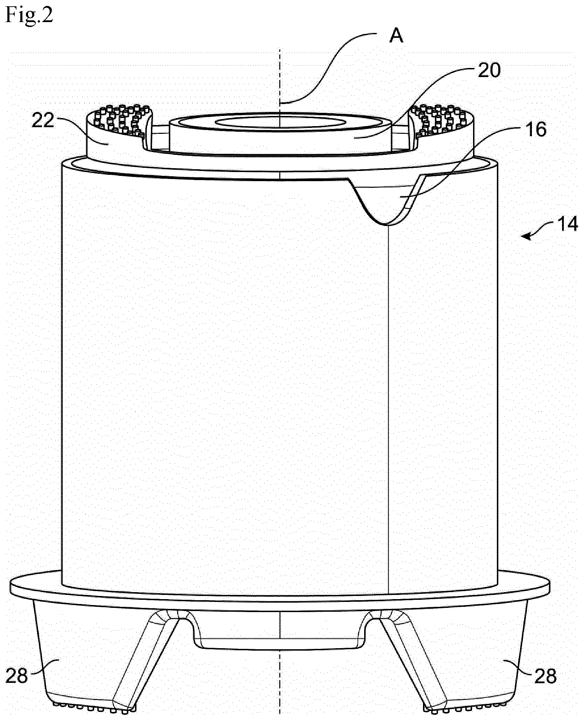

Comme représenté aux figures 1 et 2, l'articulation 14 élastique comporte une bague 16 tubulaire extérieure d'axe "A". A titre non limitatif, l'axe « A » est ici orienté verticalement. La bague 16 extérieure comporte ici à son extrémité inférieur une collerette 18 qui s'étend radialement en saillie.

L'articulation 14 comporte en outre une bague 20 tubulaire intérieure concentrique à la bague 40 extérieure.

Un manchon 22 élastique est intercalé radialement entre la bague 20 intérieure et la bague 16 extérieure. La bague 20 intérieure est ainsi liée à la bague 16 extérieure par l'intermédiaire du manchon 22 élastique.

Le manchon 22 élastique est par exemple réalisé en un matériau élastomère. Le manchon 22 élastique permet à la bague 16 extérieure de coulisser élastiquement selon une direction axiale par rapport à la bague 20 intérieure. Ceci permet notamment de conférer une certaine souplesse à la liaison entre le châssis 10 et l'élément 12 de liaison au sol par déformation en cisaillement axial du manchon 22 élastique.

Pour limiter le déplacement axial de la bague 16 extérieure par rapport à la bague 20 intérieure, il est connu d'équiper l'articulation 14 élastique avec une face 24 radiale de butée. Cette face 24 radiale de butée est portée rigidement par un élément de support. L'élément de support est ici formé par une coupelle 26. La coupelle 26 présente ici un orifice 27 central.

Cette face 24 radiale de butée est destinée à être agencée de manière fixe par rapport à la bague 20 intérieure. La face radiale 24 de butée est ici agencée dans une position axiale dans laquelle la face 24 de butée est agencée en vis-à-vis de la collerette 18 de la bague 16 extérieure avec un jeu "J1" axial déterminé de saturation lorsque le manchon 22 élastique est dans un état non contraint axialement.

En outre, le manchon 22 élastique comporte au moins un tampon 28 formé par au moins une portion qui s'étend axialement en saillie par rapport à la bague 16 extérieure.

Comme représenté à la figure 2, le manchon 22 élastique comporte ici deux tampons 28 diamétralement opposés par rapport à l'axe « A ». Chaque tampon 28 présente la forme d'un segment d'anneau.

En variante, le manchon 22 élastique comporte un seul tampon annulaire.

Selon une autre variante, le manchon 22 élastique comporte une pluralité de tampons répartis régulièrement autour de l'axe « A ».

Chaque tampon 28 est monté serré axialement contre une zone 30 annulaire d'appui de la face 24 de butée. Plus particulièrement chaque tampon 28 est ici intercalé entre la collerette 18 et la face 24 de butée.

Selon un exemple d'agencement illustré à la figure 1, la bague 20 intérieure est montée fixe sous le châssis 10. L'axe « A » est ici monté sensiblement verticalement. La bague 20 intérieure est notamment fixée par une vis 29 dont une tige est insérée à l'intérieur de la bague 20 intérieure. La tige est aussi passée à travers l'orifice 27 central de la coupelle 26. Une tête 31 de la vis est ici agencée au-dessous de la coupelle 26 pour la serrer axialement contre un bord inférieur de la bague 20 intérieure. La coupelle 26 présente à cet effet une face 35 radiale de serrage qui est traversée par l'orifice 27 central. La tige de la vis 29 est insérée dans un orifice de fixation du châssis 10 et une extrémité libre de la vis 29 est vissée dans un écrou 33. Ainsi, la bague 20 intérieure et la coupelle 26 sont serrées axialement contre le châssis entre la tête 31 et l'écrou 33.

Le jeu « J1 » de saturation permet de limiter et d'amortir le déplacement axial dans un sens de la bague 16 extérieure, et donc de l'élément 12 de liaison au sol, par rapport à la bague 20 intérieure, et donc par rapport au châssis 10.

Selon les enseignements de l'invention, pour garantir que chaque tampon 28 demeure en permanence en contact avec la face 24 de butée, la face 24 de butée comporte un rebord 32 périphérique qui s'étend axialement en saillie par rapport à la face 24 de butée en direction de la bague 16 extérieure. Le rebord 32 entoure la zone 30 d'appui de la face 24 de butée. Ainsi, le rebord 32 forme une barrière qui empêche le fluage de chaque tampon 28 radialement vers l'extérieur.

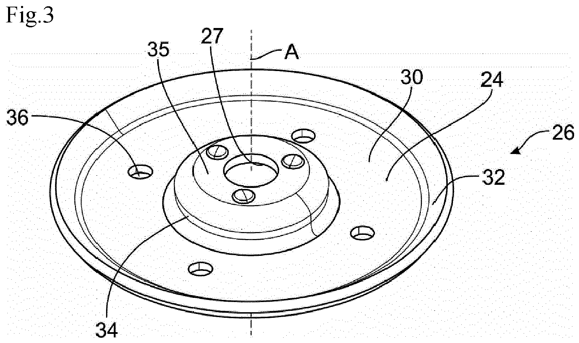

Dans l'exemple représenté à la figure 3, le rebord 32 périphérique forme un anneau continu qui entoure complètement la zone 30 d'appui.

La zone 30 d'appui de la face 24 de butée s'étend ici radialement vers l'intérieur jusqu'à la bague 20 intérieure. La face 24 de butée comporte en outre un rebord 34 interne qui est agencé concentriquement à l'intérieur du rebord 32 périphérique et qui délimite radialement vers l'intérieur la zone 30 d'appui. Le rebord 34 interne s'étend axialement vers la bague 20 intérieure. Ainsi, le rebord périphérique 32, la zone 30 d'appui et le rebord 34 interne délimitent une cuvette annulaire.

Le rebord 34 interne relie ici la face 24 de butée avec le face 35 de serrage qui est décalée axialement vers la bague 20 intérieure par rapport à la face 24 de butée.

L'articulation 14 élastique est susceptible d'être exposée à des projections d'eau lors de l'utilisation du véhicule. Lorsque l'axe « A » de l'articulation 14 élastique est destiné à être agencé globalement verticalement et que la coupelle 26 est destinée à être agencée en bas de l'articulation 14 élastique, le rebord 32 risque de retenir de l'eau ainsi projetée. Pour éviter que l'eau ne stagne dans la coupelle 26, la coupelle 26 est traversée d'orifices 36 d'évacuation qui débouchent dans la zone d'appui de la face 24 de butée.

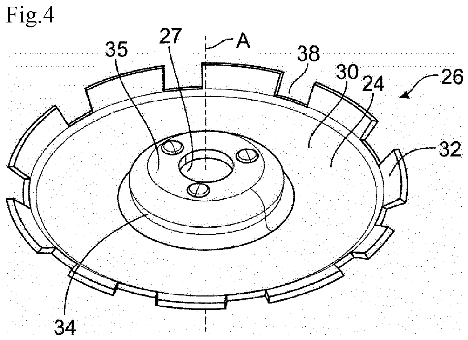

En variante de l'invention représentée à la figure 4, le rebord 32 périphérique forme un anneau discontinu présentant des créneaux 38 libres. Dans ce cas, les créneaux peuvent assurer l'évacuation de l'eau. Il est cependant possible de conserver les orifices 36 d'évacuation de l'eau dans cette variante de réalisation.

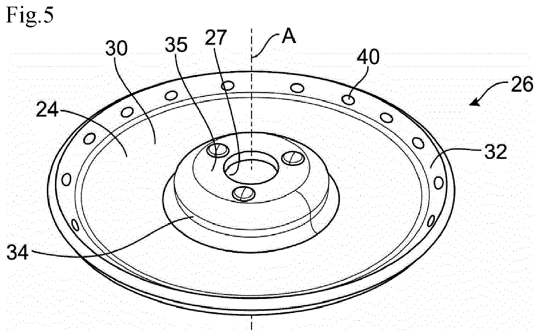

Selon une autre variante de réalisation représentée à la figure 5, le rebord 32 périphérique est continu mais il est ajouré. Les ajours 40 permettent d'assurer l'évacuation de l'eau. Il est cependant possible de conserver les orifices 36 d'évacuation de l'eau dans cette variante de réalisation.

## Revendications

1. Articulation (14) élastique pour relier un élément (12) de liaison au sol à un châssis (10) de véhicule automobile comportant :
- une bague (16) extérieure présentant un axe (A) principal et reliée à l'élément (12) de liaison au sol ;
- une bague (20) intérieure reliée au châssis (10) du véhicule et montée concentriquement dans la bague (16) extérieure ;
- un manchon (22) élastique intercalé radialement entre la bague (20) intérieure et la bague (16) extérieure, le manchon (22) élastique comportant au moins un tampon (28) déformable qui s'étend axialement en saillie par rapport à la bague (16) extérieure ;
- une face (24) de butée orthogonale à l'axe (A) principal qui est fixe par rapport à la bague (20) intérieure et contre une zone (30) annulaire d'appui de laquelle les tampons (28) sont montés serrés axialement,
**caractérisé en ce que** la face (24) de butée comporte un rebord (32) périphérique qui s'étend axialement en saillie et qui entoure la face (30) d'appui afin d'empêcher le fluage des tampons (28) radialement vers l'extérieur.

2. Articulation (14) élastique selon la revendication précédente, **caractérisée en ce que** la zone (30) d'appui de la face (24) de butée s'étend radialement vers l'intérieur jusqu'à la bague (20) intérieure.

3. Articulation (14) élastique selon l'une quelconque des revendications précédentes, **caractérisé en ce que** le rebord (32) périphérique forme un anneau continu qui entoure complètement la zone (30) d'appui.

4. Articulation (14) élastique selon l'une quelconque des revendications 1 ou 2, **caractérisée en ce que** le rebord (32) périphérique forme un anneau discontinu présentant des créneaux (38) libres.

5. Articulation (14) élastique selon l'une quelconque des revendications précédentes, **caractérisée en ce que** le rebord (32) périphérique est ajouré.

6. Articulation (14) élastique selon l'une quelconque des revendications précédentes, **caractérisée en ce que** la face (24) de butée est portée par une coupelle (26) radiale.

7. Articulation (14) élastique selon la revendication précédente, **caractérisée en ce que** la coupelle (26) est traversée d'orifices (36) d'évacuation d'eau qui débouchent dans la zone (30) d'appui de la face (24) de butée.

8. Articulation (14) élastique selon l'une quelconque des revendications précédentes, **caractérisée en ce que** la face (24) de butée comporte un rebord (34) interne qui est agencé concentriquement à l'intérieur du rebord (32) périphérique et qui délimite radialement vers l'intérieur la zone (30) d'appui.

9. Articulation (14) élastique selon la revendication précédente, **caractérisée en ce que** le rebord (34) interne relie la face (24) d'appui et une face (35) radiale de serrage de la coupelle (26) contre la bague (20) intérieure.

10. Articulation (14) élastique selon l'une quelconque des revendications précédentes, **caractérisée en ce que** la bague (16) extérieure présente une collerette (18) radiale à l'extrémité axiale agencée à proximité de la face (24) de butée, le tampon (28) étant intercalé axialement entre la collerette (18) et la face (24) de butée.
